# FASCICULE DE BREVET EUROPEEN

(11) **EP 3 630 615 B1**
(45) Date de publication et mention de la délivrance du brevet: **21.06.2023**
(21) Numéro de dépôt: 18736983.0
(22) Date de dépôt: 23.05.2018
(51) Int. Cl.: B65B 7/00, B65B 47/02, B65B 47/04, B65B 57/02, B65B 57/04, B65B 57/08, B65B 61/00, B65D 6/00, B29C 51/26, B29C 51/42, B29C 51/46, B65G 54/02, B65G 43/08

(54) **INSTALLATION POUR FABRIQUER DES RÉCIPIENTS PAR THERMOFORMAGE**
ANLAGE ZUR HERSTELLUNG VON BEHÄLTERN MITTELS THERMOFORMEN
FACILITY FOR PRODUCING CONTAINERS BY MEANS OF THERMOFORMING

(30) Priorité: 24.05.2017 FR 1754615
(43) Date de publication de la demande: 08.04.2020
(73) Titulaire: ERCA, 91940 Les Ulis (FR)
(72) Inventeur: SCHWAB, Dominique, 78000 Versailles (FR); COOPER, Timothy, 94240 L'Hay Les Roses (FR)
(74) Mandataire: Cabinet Beau de Loménie
(86) Numéro de dépôt international: PCT/FR2018/051226
(87) Numéro de publication internationale: WO 2018/215724

(56) Documents cités:
- DE-B3-102006 025 090
- JP-A- 2012 232 780
- US-A- 4 289 469
- US-A- 5 170 714
- US-B1- 9 008 831

## Description

Le présent exposé concerne une installation pour fabriquer des récipients par thermoformage, comprenant des moyens de convoyage aptes à être commandés par une unité de commande pour entraîner un substrat thermoplastique dans une succession de postes de traitement selon un sens de convoyage, les postes de traitement comprenant au moins un poste de chauffage du substrat et un poste de thermoformage de récipients dans le substrat chauffé, chaque poste de traitement définissant une longueur de traitement mesurée dans le sens de convoyage.

Ce type d'installation est connu, par exemple par le document FR 2 839 465. L'installation peut servir non seulement à la fabrication de récipients, mais encore à leur remplissage et à leur fermeture (l'installation est alors dite de type « form-fill-seal »), auquel cas les postes de traitement peuvent comprendre en outre un poste de remplissage, et un poste de fermeture des récipients, en particulier par operculage. Le substrat thermoplastique peut être une bande continue, ou bien des feuilles ou des plaquettes. Classiquement, ce substrat est entraîné en pas à pas dans les différents postes de traitement. Ainsi, le ou les substrats présents à un temps donné dans un poste sont classiquement tous déplacés à la même vitesse, ou tous immobilisés en même temps dans les postes de traitement, pour y subir le traitement souhaité. Les moyens d'entraînement peuvent par exemple être une bande à défilement linéaire, ou bien un carrousel.

Ces installations donnent satisfaction, mais les cadences de fabrication sont strictement liées à la durée de stationnement dans le poste nécessitant le traitement le plus long. En d'autres termes, même lorsque le traitement dans un poste peut être réalisé sur un laps de temps très bref, le substrat y reste pendant l'intégralité de la phase d'arrêt, dont la durée est celle du traitement le plus long. De plus, la durée d'exécution des phases de déplacement du ou des substrats est également calée sur la situation qui nécessite le déplacement le plus lent. En particulier, si le déplacement des récipients thermoformés doit être réalisé avec davantage de précautions que le déplacement du substrat avant ce thermoformage, les deux déplacements seront cependant réalisés à la même vitesse et sur le même laps de temps. De plus, lorsque l'installation concerne non seulement la fabrication de récipients, mais également leur remplissage, la phase de déplacement des récipients remplis doit être réalisée avec de grandes précautions pour éviter une agitation excessive du produit contenu dans les récipients qui, surtout lorsque celui-ci est liquide ou pâteux, pourrait occasionner des éclaboussures au voisinage des récipients.

Le document US5,170,714 divulgue un appareil de traitement sous vide comprenant un système de transport du substrat devant être traité, qui utilise des moyens de transport de substrat.

En résumé, les installations de l'état de la technique connaissent des contraintes fortes en termes de cadences de fabrication, ces cadences étant classiquement calées sur la phase de traitement ou de déplacement qui doit être réalisée avec le plus de temps et le plus de précautions.

Le présent exposé vise à améliorer cet état de la technique en remédiant au moins substantiellement aux inconvénients précités.

Ainsi, selon un premier aspect, le présent exposé concerne une installation pour fabriquer des récipients par thermoformage, comprenant des moyens de convoyage aptes à être commandés par une unité de commande pour entraîner un substrat thermoplastique dans une succession de postes de traitement selon un sens de convoyage, les postes de traitement comprenant au moins un poste de chauffage du substrat et un poste de thermoformage de récipients dans le substrat chauffé, chaque poste de traitement définissant une longueur de traitement mesurée dans le sens de convoyage, installation dans laquelle les moyens de convoyage comprennent une pluralité de convoyeurs élémentaires configurés, chacun, pour entraîner dans les postes de traitement une feuille élémentaire de substrat dont la longueur, mesurée dans le sens de convoyage, est sensiblement égale à la longueur de traitement, les convoyeurs élémentaires coopérant avec une piste de déplacement et leurs déplacements respectifs étant commandés selon des instructions de commande de déplacement respectives générées par l'unité de commande de sorte que les convoyeurs élémentaires stationnent plus longtemps dans le poste de chauffage que dans le poste de thermoformage et soient déplacés plus rapidement entre le poste de chauffage et le poste de thermoformage que en aval du poste de thermoformage.

Optionnellement, les postes de traitement comprennent en outre un poste de remplissage de récipients.

Selon le présent exposé, chaque feuille élémentaire de substrat est successivement entraînée dans les différents postes de traitement de l'installation par le convoyeur élémentaire qui la porte. Les déplacements de ce convoyeur élémentaire sont commandés spécifiquement en tenant compte de la phase de traitement ou de déplacement considérée. Par exemple, entre les phases de traitement qui précèdent le thermoformage des récipients, la phase de déplacement de la feuille peut être très rapide, c'est-à-dire que l'accélération, la vitesse et la décélération peuvent être fortes. En revanche, la feuille élémentaire dans laquelle des récipients ont déjà été formés doit éventuellement être déplacée avec davantage de précautions, de sorte que l'accélération et la décélération doivent être plus douces, la vitesse maximale étant éventuellement plus faible. Ceci est en particulier le cas pour la phase de déplacement des récipients remplis, lorsque l'installation comprend, parmi les postes de traitement, un poste de remplissage. En conséquence, on peut commander l'installation pour que les temps de stationnement dans les différents postes de traitement tiennent compte de ces contraintes. En particulier, en tenant compte de la possibilité de déplacer les feuilles élémentaires plus rapidement entre le poste de chauffage et le poste de thermoformage que en aval du poste de thermoformage, on peut faire stationner les feuilles plus longtemps dans le poste de chauffage que dans le poste de thermoformage, de manière à optimiser le chauffage. Ceci permet par exemple de limiter l'énergie nécessaire au chauffage, ou bien de diminuer le nombre de postes de chauffage. Lorsque l'installation comporte un poste de remplissage de récipients, le remplissage peut être effectué très rapidement, et le convoyeur qui porte la feuille élémentaire dans laquelle les récipients ont été thermoformés et remplis peut ensuite être déplacé lentement, alors que le début de son déplacement intervient avant le début du déplacement de la feuille élémentaire qui, au même pas, se trouve dans le poste de chauffage.

Optionnellement, la piste forme une boucle comprenant un trajet aller sur lequel les convoyeurs élémentaires circulent pour successivement placer les feuilles élémentaires qu'ils convoient dans les postes de traitement, et un trajet retour, sur lequel les convoyeurs élémentaires circulent pour retourner à l'amont de l'installation.

Les déplacements des convoyeurs élémentaires sur le trajet aller sont commandés de manière à permettre les phases de traitement dans les différents postes de traitement. Ces déplacements sont donc séquentiels et leur durée totale dépend des postes de traitement et des traitements qui doivent y être effectués. En revanche, sur le trajet retour, les convoyeurs peuvent être déplacés beaucoup plus rapidement puisqu'ils n'y subissent en principe aucun traitement autre que, éventuellement, un nettoyage pour s'assurer qu'aucun débris de feuille élémentaire n'y est resté coincé. Ceci permet notamment de limiter le nombre de convoyeurs élémentaires, puisque, alors que sur le trajet aller, il faut un convoyeur pour chacun des postes de traitement, il peut suffire sur le trajet retour, qui fait pourtant en principe la même longueur que le trajet aller, de n'avoir que un ou deux convoyeurs.

Optionnellement, l'installation comprend des moyens pour repérer la position des convoyeurs élémentaires par rapport aux postes de traitement.

Selon un premier exemple, chaque poste de traitement présente un détecteur configuré pour générer une information de position, par rapport au poste de traitement considéré, d'une feuille élémentaire convoyée par un convoyeur élémentaire donné, l'unité de commande étant configurée pour générer, sur la base de ladite information de position, une instruction de commande de déplacement dudit convoyeur élémentaire donné.

Selon un deuxième exemple, chaque convoyeur élémentaire présente un détecteur configuré pour générer une information de position du convoyeur élémentaire considéré par rapport à un poste de traitement donné, l'unité de commande étant configurée pour générer, sur la base de ladite information de position, une instruction de commande de déplacement dudit convoyeur considéré.

Ces premier et deuxième exemples de moyens de repérage de position, peuvent être prévus en combinaison sur une même installation, ou bien seul l'un d'eux peut être prévu.

Optionnellement, les instructions de commande de déplacement comprennent des instructions de vitesse de déplacement et/ou des instructions d'accélération.

Optionnellement, chaque convoyeur élémentaire est équipé d'une motorisation élémentaire, les instructions de commande de déplacement comprenant des instructions d'activation des motorisations élémentaires des convoyeurs élémentaires respectifs.

Par exemple, la motorisation élémentaire comprend un première partie d'un moteur électrique, en particulier de type servomoteur linéaire, et la piste est équipée d'une multiplicité de bobinages magnétiques, alimentés sélectivement par l'unité de commande et formant la deuxième partie du moteur électrique.

Optionnellement, les postes de traitement sont disposés d'un même côté le long de la piste.

Optionnellement, les postes de traitement sont supportés par des supports, également disposés dudit même côté de la piste.

Dans ce cas, les postes de traitement peuvent aisément être écartés de la piste, par exemple pour de la maintenance ou du remplacement.

Optionnellement, l'installation comprend un poste d'entrée ayant des moyens d'amenée d'une bande de matériau thermoplastique selon une direction d'alimentation transversale au sens de convoyage et des moyens de découpe, dans ladite bande, de feuilles élémentaires dont la longueur est définie par la largeur de la bande de matériau thermoplastique.

L'encombrement de l'installation selon la direction du convoyage est ainsi limité.

Optionnellement, les convoyeurs élémentaires comprennent des préhenseurs configurés pour saisir un seul bord de saisie des feuilles élémentaires, les préhenseurs des convoyeurs élémentaires convoyant les feuilles élémentaires étant tous situés du même côté de la piste. En particulier, lorsque la piste est linéaire, ces préhenseurs peuvent être alignés.

En d'autres termes, les feuilles élémentaires peuvent être saisies en "porte-à-faux" et les convoyeurs se trouvent tous du même côté de ces feuilles, de sorte que les opérations de maintenance et de remplacement éventuel sont facilitées.

Optionnellement, l'installation comprend un support pour les feuilles élémentaires définissant un plan de travail dans les différents postes de traitement.

Optionnellement, les postes de traitement comprennent en outre un poste de remplissage des récipients thermoformés et un poste de fermeture des récipients par application de feuilles d'operculage sur les feuilles élémentaires comportant les récipients thermoformés, l'installation comprenant en outre un outil de découpe amont configuré pour découper des zones de déchets dans les feuilles élémentaires avant l'application des feuilles d'operculage, et un outil de découpe aval configuré pour découper des zones de déchets correspondantes dans les feuilles d'operculage.

Dans ce cas, on peut séparer les déchets découpés dans les feuilles élémentaires, qui sont en matériau thermoplastique, et ceux qui sont découpés dans les feuilles d'operculage, qui sont dans un autre matériau. Ceci facilite la récupération de ces déchets et le recyclage éventuel.

Optionnellement, l'installation comprend des moyens d'amenée d'une bande de matériau d'operculage selon une direction transversale au sens de convoyage et des moyens de découpe des feuilles d'operculage dans ladite bande de matériau d'operculage, de sorte que la longueur des feuilles d'operculage est définie par la largeur de la bande de matériau d'operculage.

Les feuilles d'operculage sont ainsi réalisées de manière simple et compatible avec un encombrement réduit dans la direction d'avancement.

Optionnellement, l'outil de découpe amont fait partie du poste d'entrée et, optionnellement, il fait partie du même poste de découpe que les moyens de découpe des feuilles élémentaires.

Le présent exposé sera bien compris à la lecture de la description détaillée qui suit, qui se réfère, à titre d'exemple de réalisation, aux dessins annexés sur lesquels :
- la figure 1 est une vue en perspective d'une installation conforme au présent exposé ;
- la figure 2 est une vue en coupe dans un plan transversal II représenté sur la figure 1 ;
- la figure 3 montre une partie de l'installation de la figure 1 ;
- la figure 4 est une vue de dessus d'une partie de l'installation ; et
- la figure 5 est une vue de dessous de l'outil de découpe des feuilles élémentaires.

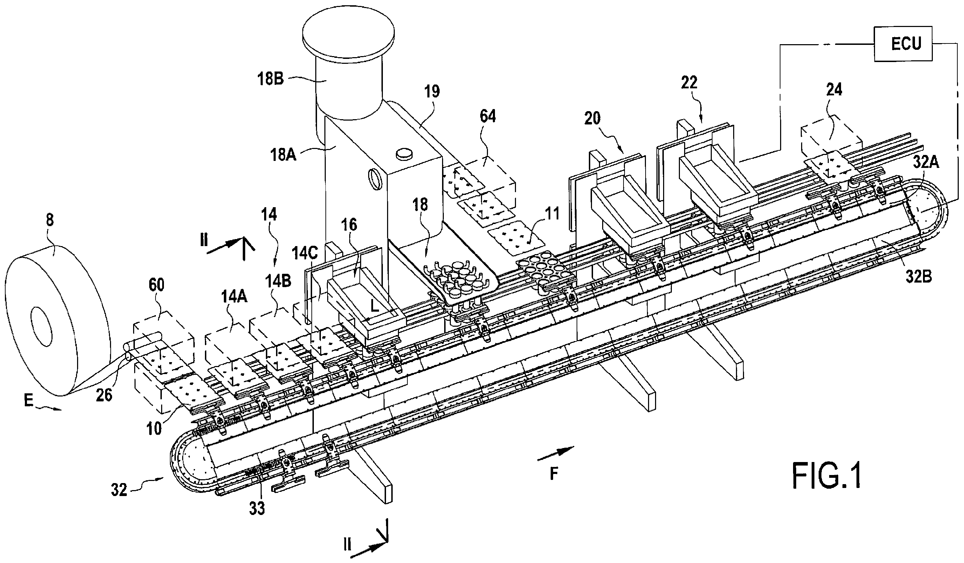

L'installation représentée sur la figure 1 comprend plusieurs stations de traitement au travers desquelles sont entraînées en pas à pas les feuilles élémentaires de substrat thermoplastique 10. Considérés successivement dans le sens F de convoyage, ces postes de traitement comprennent des postes de chauffage 14A, 14B et 14C (il peut y avoir moins ou davantage de postes de chauffage), un poste 16 de thermoformage de récipients, un poste 18 de remplissage des récipients thermoformés, un poste 20 de fermeture des récipients par application de feuilles d'operculage 11 sur les feuilles élémentaires comportant les récipients thermoformés et remplis, un poste 22 de prédécoupe des récipients par groupes d'un ou plusieurs récipients, et un poste 24 d'évacuation des récipients thermoformés et ainsi conditionnés en groupes.

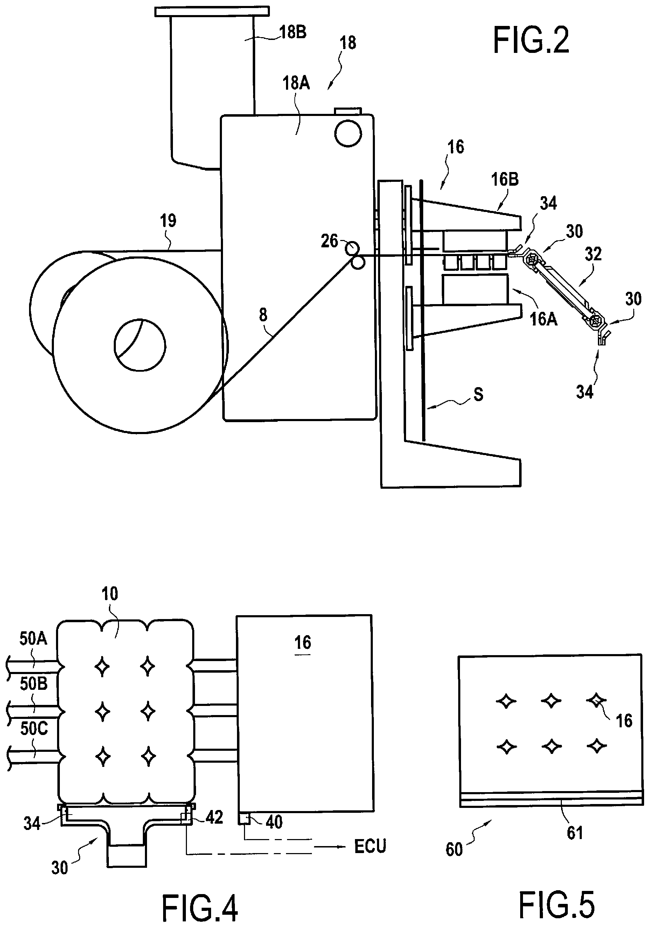

Comme on le voit mieux sur la figure 2, le poste de thermoformage 16 comporte, de manière classique, un bloc de moule 16A, et un bloc de pistons 16B, ce bloc de pistons comprenant autant de pistons de thermoformage que le bloc de moule comprend de chambres de thermoformage. Bien entendu, l'installation peut en outre comprendre des postes ou des outils supplémentaires, tels que des postes de nettoyage, ou encore des outils de banderolage, par exemple disposés dans la zone du poste de thermoformage, pour banderoler ou étiqueter les récipients, en particulier par disposition de banderoles ou d'étiquettes dans les chambres de thermoformage avant le thermoformage. Le poste de remplissage comprend quant à lui un ou plusieurs réservoirs 18A, 18B de produits devant être disposés dans les récipients, par exemple un produit pâteux tel que du yogourt, et un produit liquide tel que du coulis. Ce poste de remplissage comprend également des dispositifs de dosage du ou des produis devant être disposés dans les récipients.

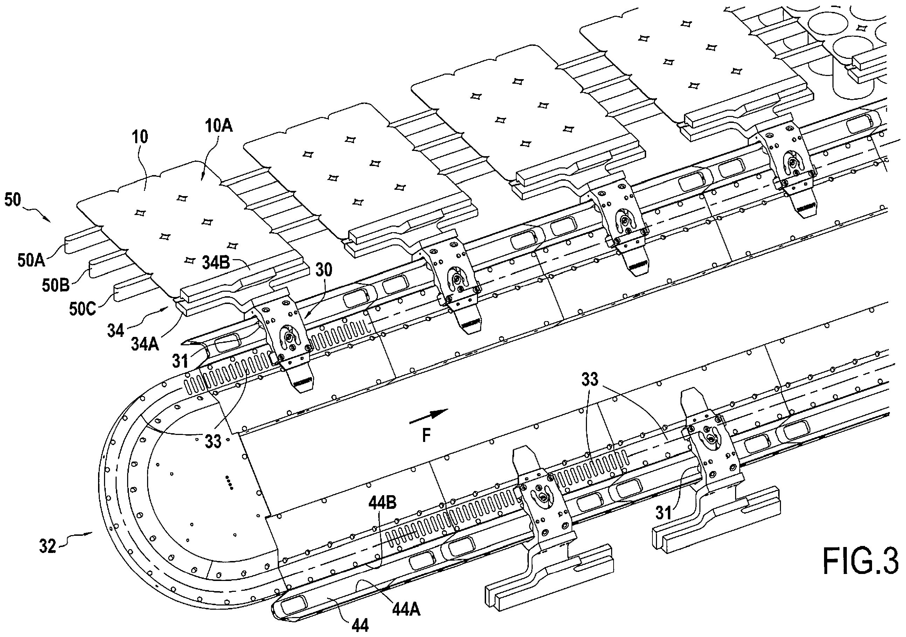

L'installation comprend également des moyens 26 d'amenée d'une bande thermoplastique 8 dans laquelle les feuilles élémentaires 10 sont découpées, ainsi que les moyens d'amenée d'une bande d'operculage 19 dans laquelle sont découpées les feuilles d'operculage 11. Les différentes feuilles élémentaires 10 sont entraînées dans les différents postes de traitement de l'installation par des convoyeurs élémentaires 30, mieux visibles sur la figure 3. Ces convoyeurs se déplacent en coopérant avec une piste de déplacement 32. On voit sur les figures 1 et 3 que cette piste forme une boucle, avec un trajet aller 32A sur lequel les convoyeurs élémentaires 30 circulent pour successivement placer les feuilles élémentaires 10 qu'ils convoient dans les postes de traitement, et un trajet retour 32B permettant aux convoyeurs élémentaires 30 de retourner à vide à leur point de départ, à l'amont de l'installation.

Chaque convoyeur élémentaire 30 comprend un préhenseur 34 qui saisit une feuille élémentaire en amont de la station, pour l'entraîner vers l'aval. Comme on le voit notamment sur les figures 2 et 3, les préhenseurs 34 comprennent deux mâchoires, respectivement 34A et 34B qui peuvent être ouvertes pour libérer une feuille ou fermées pour la pincer entre elles.

Chacun des convoyeurs élémentaires 30 comporte sa propre motorisation élémentaire. L'installation comprend une unité de commande ECU qui commande l'activation des motorisations élémentaires des différents convoyeurs élémentaires. En l'espèce, les convoyeurs élémentaires peuvent en particulier être entraînés à l'aide de moteurs électriques linéaires du type servomoteur pilotable en fonction de leurs positions sur la piste 32, par exemple comme décrit dans US 20150008768, US 20150048693 ou US 20160325761.

Les composants respectifs de ces moteurs linéaires sont respectivement portés par les convoyeurs élémentaires et par la piste de déplacement. Ainsi, comme on le voit en particulier sur la figure 3, la piste 32 comprend une multiplicité de bobinages magnétiques 33 qui sont répartis sur toute la longueur de la piste et sont reliés à un circuit imprimé dont les contacts sont sélectivement alimentés en courant alternatif à l'aide de l'unité de commande ECU (pour la simplicité du dessin, cette multiplicité de bobinages est seulement partiellement schématisée). De leur côté, les convoyeurs élémentaires 30 portent des aimants permanents. Ainsi, lorsqu'un convoyeur se trouve au regard d'un bobinage magnétique 33 alimenté électriquement, son aimant permanent est excité par ce bobinage, de manière à générer une énergie mécanique de poussée. On comprend que, du fait du grand nombre de bobinages magnétiques 33 présents sur la piste, la position et la vitesse de déplacement de chaque convoyeur élémentaire peuvent être réglées très finement en fonction des alimentations de ces différents bobinages. Les bobinages magnétiques 33 constituent des unités d'excitation des aimants permanents des convoyeurs élémentaires, ces bobinages étant alimentés sélectivement par l'unité de commande ECU pour activer les aimants permanents qui forment des motorisations élémentaires pour les convoyeurs élémentaires.

En fonction de la puissance d'alimentation des bobinages, on contrôle la vitesse de déplacement, l'accélération et la décélération.

L'installation comprend des moyens pour repérer la position des convoyeurs élémentaires 30 par rapport aux différents postes de traitement. Un exemple pour de tels moyens est représenté sur la figure 4. On reconnaît sur cette figure une feuille élémentaire 10 située à l'approche d'un poste de traitement, qui est par exemple le poste de thermoformage 16. Cette feuille est convoyée par un convoyeur élémentaire 30 partiellement représenté, avec son préhenseur 34 qui maintient un bord de la feuille.

Le poste de traitement comprend un détecteur 40 qui est configuré pour générer une information de position, par rapport à ce poste 16, de la feuille élémentaire 10 qui parvient à son approche. D'ailleurs, le convoyeur élémentaire 30 peut également présenter un détecteur 42 qui est configuré pour générer une information de position de ce convoyeur élémentaire 30 par rapport au poste de traitement 16. Dans l'exemple représenté, le détecteur 40 est situé à l'extrémité amont du poste de traitement 16, et détecte le convoyeur élémentaire lorsque le bord aval de ce dernier parvient au droit du détecteur 40. Le détecteur 40 peut par exemple être une cellule photoélectrique, et le détecteur 42 peut être un élément passif réfléchissant le signal envoyé par la cellule. Comme indiqué, tout autre moyen de détection peut être prévu, les deux détecteurs pouvant éventuellement être actifs et placés à des endroits différents. On peut par exemple disposer le détecteur 40 davantage en amont par rapport au poste 16, pour qu'il détecte l'approche du convoyeur 30, avant que ce dernier ne parvienne réellement au bord amont de ce poste. On pourrait encore prévoir que le poste de traitement soit équipé d'une cellule photoélectrique avec un émetteur et un élément réfléchissant entre lesquels, en l'absence de feuille élémentaire dans ce poste, règne un faisceau, ce faisceau étant interrompu à l'arrivée d'une feuille élémentaire 10. Quoi qu'il en soit, quel que soit le moyen de détection utilisé, on peut faire en sorte que celui-ci communique avec l'unité de commande ECU de sorte que cette dernière génère une instruction de commande à la motorisation du convoyeur élémentaire. En particulier, lorsque l'approche d'un convoyeur élémentaire portant une feuille élémentaire est détectée, la motorisation est ralentie, puis stoppée. Comme indiqué, compte tenu, dans l'exemple représenté, de la multiplicité de bobinages magnétiques 33 d'excitation des motorisations élémentaires des convoyeurs élémentaires, la position de ces derniers peut être gérée de manière extrêmement précise, par rapport à chacun des postes de traitement. De plus, les bobinages magnétiques 33 disposés entre des postes de traitement entre lesquels les feuilles élémentaires peuvent être déplacées très rapidement, par exemple en amont du poste de thermoformage 16, peuvent être alimentés de manière à commander une vitesse de déplacement élevée pour les convoyeurs élémentaires passant au droit de ces bobinages. En revanche, les bobinages magnétiques 33 disposés sur les tronçons sur lesquels le déplacement doit être plus lent, en particulier en sortie du poste de remplissage 18, peuvent être alimentés de manière à générer une vitesse plus lente et une accélération/décélération plus douce.

De même, lorsqu'un pas de travail a été effectué, et qu'il convient de déplacer les convoyeurs élémentaires vers les postes de traitement situés en aval, les bobinages magnétiques correspondants peuvent être alimentés de manière différente. En particulier, l'opération de remplissage dans le poste de remplissage 18 est extrêmement rapide, et, comme indiqué, la vitesse de déplacement en aval de ce poste doit être lente. En revanche, l'opération de thermoformage dans le poste de thermoformage 16 peut être relativement lente, et il est souhaitable de faire durer autant que possible le stationnement d'une feuille élémentaire dans un poste de chauffage 14A, 14B ou 14C pour maximiser le chauffage. En conséquence, les convoyeurs élémentaires 30 portant des feuilles élémentaires qui quittent les postes de chauffage et de thermoformage peuvent n'être mis en mouvement qu'après la mise en mouvement des convoyeurs élémentaires situés en aval du poste de remplissage. Ceci est possible grâce au fait que les différents bobinages magnétiques 33 sont alimentés distinctement les uns des autres, en fonction de leurs positions respectives par rapport aux différents postes de traitement.

Les convoyeurs élémentaires 30 peuvent comprendre des galets de roulement 31 qui coopèrent avec les pistes de roulement pour guider les déplacements de ces convoyeurs élémentaires. Par exemple, comme on le voit sur la figure 3, la piste 32 peut, le long des bobinages 33, être équipée d'une partie de piste de roulement 44 ayant un ou plusieurs rails de coulissement. En l'espèce, deux rails de coulissement, respectivement 44A et 44B, sont formés par les bords de cette piste de roulement. On voit sur la figure 3 des galets de roulement 31 des convoyeurs élémentaires 30 qui coopèrent avec le rail extérieur 44A de la piste de roulement 44. Pour la simplicité du dessin, on n'a pas représenté la piste de roulement 44 dans la partie courbe de la piste 42, sa géométrie pouvant être légèrement différente à cet endroit, mais cette piste peut bien évidemment être présente pour également guider le déplacement des convoyeurs élémentaires dans cette zone.

Dans la description ci-dessus, la motorisation des convoyeurs élémentaires s'effectue par des moteurs électriques linéaires dont les parties aimants permanents forment des motorisations élémentaires respectivement portées par les différents convoyeurs élémentaires, et dont les parties bobinages sont portées par la piste 32 et sélectivement alimentées électriquement, de sorte qu'à chaque passage d'un convoyeur élémentaire au droit d'un bobinage magnétique 33 se forme un moteur électrique ayant ce bobinage et l'aimant permanent de ce convoyeur élémentaire comme composants. Cependant, on pourrait concevoir que chaque convoyeur porte un moteur complet, et que la piste présente une multiplicité d'unités d'alimentation de ces moteurs, qu'il s'agisse d'une alimentation par contact ou sans contact.

L'unité de commande ECU gère de manière générale l'activation des différents éléments de l'installation. Comme indiqué, elle gère l'activation des motorisations élémentaires des différents convoyeurs élémentaires 30. Par ailleurs, elle gère les séquences d'ouverture fermeture des préhenseurs 34. Par exemple, la fermeture des mâchoires 34A et 34B de ces préhenseurs peut être commandée par alimentation d'électroaimants dont l'une de ces mâchoires ou les deux peuvent être pourvues. L'unité de commande ECU gère également l'activation des différents éléments des postes de traitement, en particulier les séquences d'ouverture et fermeture et de déplacement des pistons de thermoformage du poste de thermoformage, et les séquences d'ouverture et fermeture des buses d'alimentation en produits du poste de remplissage, ainsi que les déplacements des couteaux des postes de découpe et de prédécoupe.

On voit sur les figures que les différents postes de traitement sont tous disposés du même côté de la piste 32. Ceci permet de faciliter les opérations de maintenance. En particulier, un poste de traitement peut être aisément écarté de la piste en étant déplacé latéralement par rapport à cette dernière, pour permettre de le remplacer par un autre poste de traitement, ou bien d'y effectuer des opérations de maintenance. On relève également que, compte tenu de la possibilité d'activer à volonté les motorisations des différents convoyeurs élémentaires, les espaces entre les différents postes de traitement peuvent légèrement varier. Ceci permet, sans opération complexe, de paramétrer l'installation pour y traiter les longueurs de traitement différentes.

On voit sur les figures, en particulier la figure 1, que les différents postes de traitement définissent tous la même longueur de traitement L mesurée dans le sens de convoyage. La longueur de traitement L est la longueur de feuille élémentaire 10 qui peut être simultanément traitée dans un même poste de traitement. Elle correspond à la longueur des feuilles élémentaires 10 mesurée dans le sens F.

Par exemple, l'installation représentée permet de fabriquer simultanément trois rangées de quatre récipients. Les trois rangées sont situées les unes aux autres dans le sens F de convoyage, dans lequel la longueur L est mesurée, et les quatre rangées étant mesurées dans la direction de la largeur des feuilles élémentaires. A partir d'une même installation, on peut aisément fabriquer un nombre plus grand de rangées, en écartant un ou plusieurs des postes de traitement pour les remplacer par d'autres.

On voit que les postes de traitement sont disposés sur des supports S (référencés sur la figure 2) qui sont également disposés d'un même côté de la piste. Ainsi, toutes les opérations de maintenance peuvent être effectuées sur ces supports sans interférer avec le trajet de convoyage. Comme on le voit en particulier sur la figure 2, les outils des différents postes de traitement, en l'espèce le bloc de moule 16A et le bloc de contre-moule 16B, peuvent être disposés en porte-à-faux ou en balcon par rapport aux supports S pour pouvoir être placés sur le trajet d'avancement des feuilles élémentaires 10.

On voit que la piste 32 est disposée de l'autre côté du trajet de convoyage des feuilles élémentaires 10 par rapport aux postes de traitement. Les préhenseurs 34 des convoyeurs élémentaires 30 saisissent chacun un seul bord de saisie 10A des feuilles élémentaires 10, tous les convoyeurs élémentaires situés sur le trajet aller étant alignés, de sorte que tous les bords de saisie des feuilles élémentaires en cours de traitement sont également alignés. Les éventuelles interventions de maintenance sur la piste et les convoyeurs élémentaires sont donc également facilités, puisqu'ils se placent de l'autre côté du trajet de convoyage par rapport aux postes de traitement, sans interférer avec ces derniers. Les feuilles élémentaires présentent en général une certaine souplesse. Par conséquent, l'installation peut comprendre un support 50 qui définit un plan de travail dans les différents postes de traitement, tout le long du trajet de convoyage des feuilles élémentaires. En l'espèce, ce support 50 présente trois règles de support 50A, 50B et 50C, qui sont disposées de manière à soutenir les feuilles élémentaires 10A dans les zones de déchets situées entre les récipients des différentes rangées.

En se référant à nouveau à la figure 1, on voit que l'installation comprend un poste d'entrée E dans lequel la bande thermoplastique 8 est amenée dans le trajet de convoyage des feuilles élémentaires 10. En l'espèce, cette bande est déroulée à partir d'une bobine dont l'axe est parallèle au sens F de convoyage. La bande 8 est donc amenée dans le trajet de convoyage en étant déplacée transversalement à ce sens de convoyage F. La largeur de la bande 8 définit la longueur L des feuilles élémentaires. Ces feuilles élémentaires sont découpées à l'extrémité de la bande 8, selon des tronçons de longueur constante, cette longueur définissant la largeur des feuilles élémentaires 10. Les moyens de découpe 60 servant à découper les feuilles élémentaires sont situés en entrée du plan de convoyage, et comprennent par exemple un couteau 61 (voir figure 5) dont l'arête de découpe est parallèle au sens de convoyage F, et qui peut être commandé en déplacement vertical séquentiel, en coopérant avec un contre-couteau. Classiquement, l'extrémité de la bande 8 peut être amenée jusqu'à reposer sur le support 50 en entrée du plan de convoyage, avant que ce couteau ne soit activé pour séparer son extrémité reposant sur le support du reste de la bande, formant ainsi dans cette portion d'extrémité une feuille élémentaire 10. Le couteau 61 est représenté sur la figure 5 qui montre, en vue de dessous, l'outil de découpe du poste 60. On voit que cet outil comprend également un outil de découpe amont 62, formé de petits couteaux "en étoile" servant à découper les zones de déchets dans les feuilles élémentaires 10. En effet, dans la mesure où plusieurs récipients sont simultanément formés dans ces zones, les zones de jonction entre les bords des différents récipients constituent des déchets devant être éliminés. Selon le présent exposé, ces déchets peuvent être éliminés du matériau thermoplastique, en l'espèce les feuilles élémentaires, avant l'application des opercules de scellage des récipients. En particulier, selon l'exposé, l'élimination de ces déchets et la découpe des feuilles élémentaires peut être opérée dans le même moyen de découpe 60, en entrée de l'installation.

Comme on le voit sur la figure 1, la bande d'operculage 19 est alimentée de la même manière que la bande de matériau thermoplastique 8. Des moyens de découpe 64 globalement analogues aux moyens de découpe 60 précédemment décrits peuvent être prévus pour coopérer avec la bande de matériau d'operculage 19 et découper dans cette dernière des feuilles d'operculage de dimension analogue à celles des feuilles élémentaires, et découper en même temps dans ces feuilles des zones de déchets d'opercule analogues aux zones de déchets précitées. L'installation comprend ainsi un outil de découpe amont, situé dans les moyens de découpe 60 pour découper les zones de déchets dans les feuilles élémentaires de matériau thermoplastique, et un outil de découpe aval situé dans les moyens de découpe 64 pour découper des zones de déchets correspondantes dans les feuilles d'operculage 11. Comme on l'a indiqué, l'outil de découpe amont 62 fait partie du poste d'entrée et fait partie du même poste de découpe que l'outil de découpe 61.

## Revendications

1. Installation pour fabriquer des récipients par thermoformage, comprenant des moyens de convoyage aptes à être commandés par une unité de commande (ECU) pour entraîner un substrat thermoplastique (10) dans une succession de postes de traitement (14A, 14B, 14C, 16, 18, 20, 22, 24) selon un sens de convoyage (F), les postes de traitement comprenant au moins un poste de chauffage (14A, 14B, 14C) du substrat et un poste (18) de thermoformage de récipients dans le substrat chauffé, chaque poste de traitement définissant une longueur de traitement (L) mesurée dans le sens (F) de convoyage, les moyens de convoyage comprenant une pluralité de convoyeurs élémentaires (30) configurés, chacun, pour entraîner dans les postes de traitement une feuille élémentaire (10) de substrat dont la longueur, mesurée dans le sens de convoyage, est sensiblement égale à la longueur de traitement, les convoyeurs élémentaires (30) coopérant avec une piste de déplacement (32) et leurs déplacements respectifs étant commandés selon des instructions de commande de déplacement respectives générées par l'unité de commande (ECU) de sorte que les convoyeurs élémentaires stationnent plus longtemps dans le poste de chauffage que dans le poste de thermoformage et soient déplacés plus rapidement entre le poste de chauffage et le poste de thermoformage que en aval du poste de thermoformage.

2. Installation selon la revendication 1, dans laquelle la piste (32) forme une boucle comprenant un trajet aller (32A) sur lequel les convoyeurs élémentaires (30) circulent pour successivement placer les feuilles élémentaires (10) qu'ils convoient dans les postes de traitement, et un trajet retour (32B), sur lequel les convoyeurs élémentaires (30) circulent pour retourner à l'amont de l'installation.

3. Installation selon la revendication 1 ou 2, comprenant des moyens pour repérer la position des convoyeurs élémentaires (30) par rapport aux postes de traitement (14A, 14B, 14C, 16, 18, 20, 22, 24).

4. Installation selon la revendication 3, dans laquelle chaque poste de traitement (14A, 14B, 14C, 16, 18, 20, 22, 24) présente un détecteur (40) configuré pour générer une information de position, par rapport au poste de traitement considéré, d'une feuille élémentaire (10) convoyée par un convoyeur élémentaire donné (30), l'unité de commande (ECU) étant configurée pour générer, sur la base de ladite information de position, une instruction de commande de déplacement dudit convoyeur élémentaire donné.

5. Installation selon la revendication 3 ou 4, dans laquelle chaque convoyeur élémentaire (30) présente un détecteur (42) configuré pour générer une information de position du convoyeur élémentaire (30) considéré par rapport à un poste de traitement (16) donné, l'unité de commande (ECU) étant configurée pour générer, sur la base de ladite information de position, une instruction de commande de déplacement dudit convoyeur considéré.

6. Installation selon l'une quelconque des revendications 1 à 5, dans laquelle les instructions de commande de déplacement comprennent des instructions de vitesse de déplacement et/ou des instructions d'accélération.

7. Installation selon l'une quelconque des revendications 1 à 6, dans laquelle chaque convoyeur élémentaire (30) est équipé d'une motorisation élémentaire, les instructions de commande de déplacement comprenant des instructions d'activation des motorisations élémentaires des convoyeurs élémentaires respectifs.

8. Installation selon la revendication 7, dans laquelle la motorisation élémentaire comprend une première partie d'un moteur électrique, en particulier de type servomoteur linéaire, et la piste (32) est équipée d'une multiplicité de bobinages magnétiques (33), alimentés sélectivement par l'unité de commande (ECU) et formant la deuxième partie du moteur électrique.

9. Installation selon l'une quelconque des revendications 1 à 8, dans laquelle les postes de traitement (14A, 14B, 14C, 16, 18, 20, 22, 26) sont disposés d'un même côté le long de la piste (32).

10. Installation selon la revendication 9, dans laquelle les postes de traitement sont supportés par des supports (S), également disposés dudit même côté de la piste (32).

11. Installation selon l'une quelconque des revendications 1 à 10, comprenant un poste d'entrée (E) ayant des moyens (26) d'amenée d'une bande de matériau thermoplastique (8) selon une direction d'alimentation transversale au sens de convoyage et des moyens de découpe (60), dans ladite bande de matériau thermoplastique, de feuilles élémentaires (10) dont la longueur (L) est définie par la largeur de la bande de matériau thermoplastique.

12. Installation selon l'une quelconque des revendications 1 à 11, **caractérisée en ce que** les convoyeurs élémentaires (30) comprennent des préhenseurs (34) configurés pour saisir un seul bord de saisie (10A) des feuilles élémentaires (10), les préhenseurs des convoyeurs élémentaires convoyant les feuilles élémentaires étant tous situés du même côté de la piste.

13. Installation selon l'une quelconque des revendications 1 à 12, comprenant un support (50) pour les feuilles élémentaires définissant un plan de travail dans les différents postes de traitement.

14. Installation selon l'une quelconque des revendications 1 à 13, dans laquelle les postes de traitement comprennent en outre un poste (18) de remplissage des récipients thermoformés et un poste (20) de fermeture des récipients par application de feuilles d'operculage sur les feuilles élémentaires comportant les récipients thermoformés, l'installation comprenant en outre un outil de découpe amont (61) configuré pour découper des zones de déchets dans les feuilles élémentaires (10) avant l'application des feuilles d'operculage (11), et un outil de découpe aval (64) configuré pour découper des zones de déchets correspondantes dans les feuilles d'operculage.

15. Installation selon la revendication 14, comprenant des moyens d'amenée d'une bande de matériau d'operculage (19) selon une direction transversale au sens de convoyage (F) et des moyens de découpe des feuilles d'operculage dans ladite bande de matériau d'operculage (19), de sorte que la longueur des feuilles d'operculage est définie par la largeur de la bande de matériau d'operculage.

16. Installation selon la revendication 14 ou 15, prise en combinaison avec la revendication 11, dans laquelle l'outil de découpe amont (62) fait partie du poste d'entrée (E) et, optionnellement, fait partie du même poste de découpe que les moyens (61) de découpe des feuilles élémentaires (10).

## Patentansprüche

1. Anlage zur Herstellung von Behältern durch Thermoformen, die Fördermittel umfasst, welche dazu geeignet sind, durch eine Steuereinheit (ECU) gesteuert zu werden, um ein thermoplastisches Substrat (10) in einer Abfolge von Bearbeitungsstationen (14A, 14B, 14C, 16, 18, 20, 22, 24) in einer Förderrichtung (F) weiterzubewegen, wobei die Bearbeitungsstationen zumindest eine Station zum Erwärmen (14A, 14B, 14C) des Substrats und eine Station (18) zum Thermoformen von Behältern in dem erwärmten Substrat umfassen und jede Bearbeitungsstation eine in der Förderrichtung (F) gemessene Bearbeitungslänge (L) definiert, wobei die Fördermittel mehrere elementare Fördereinrichtungen (30) umfassen, die jeweils dazu ausgestaltet sind, in den Bearbeitungsstationen einen elementaren Substratbogen (10) weiterzubewegen, dessen Länge in der Förderrichtung gemessen im Wesentlichen gleich der Bearbeitungslänge ist, wobei die elementaren Fördereinrichtungen (30) mit einer Verschiebungsbahn (32) zusammenwirken und ihre jeweiligen Verschiebungen gemäß jeweiligen Steueranweisungen für die Verschiebung gesteuert werden, die durch die Steuereinheit (ECU) erzeugt werden, so dass die elementare Fördereinrichtungen länger in der Station zum Erwärmen dass in der Station zum Thermoformen verweilen, und schneller verschieben werden zwischen der Station zum Erwärmen und der Station zum Thermoformen schneller als stromabwärts der Station zum Thermoformen .

2. Anlage nach Anspruch 1, wobei die Bahn (32) eine Schleife bildet, die eine Vorlaufstrecke (32A), auf welcher die elementaren Fördereinrichtungen (30) umlaufen, um die elementaren Bögen (10), die sie befördern, der Reihe nach in die Bearbeitungsstationen zu platzieren, und eine Rücklaufstrecke (32B) umfasst, auf welcher die elementaren Fördereinrichtungen (30) umlaufen, um an den Anfang der Anlage zurückzukehren.

3. Anlage nach Anspruch 1 oder 2, die Mittel zum Bestimmen der Position der elementaren Fördereinrichtungen (30) in Bezug auf die Bearbeitungsstationen (14A, 14B, 14C, 16, 18, 20, 22, 24) umfasst.

4. Anlage nach Anspruch 3, wobei jede Bearbeitungsstation (14A, 14B, 14C, 16, 18, 20, 22, 24) einen Detektor (40) aufweist, der dazu ausgestaltet ist, eine Positionsinformation für einen elementaren Bogen (10), der von einer gegebenen elementaren Fördereinrichtung (30) befördert wird, in Bezug auf die relevante Bearbeitungsstation zu erzeugen, wobei die Steuereinheit (ECU) dazu ausgestaltet ist, auf Grundlage der Positionsinformation eine Steueranweisung für die Verschiebung der gegebenen elementaren Fördereinrichtung zu erzeugen.

5. Anlage nach Anspruch 3 oder 4, wobei jede elementare Fördereinrichtung (30) einen Detektor (42) aufweist, der dazu ausgestaltet ist, eine Positionsinformation für die relevante elementare Fördereinrichtung (30) in Bezug auf eine gegebene Bearbeitungsstation (16) zu erzeugen, wobei die Steuereinheit (ECU) dazu ausgestaltet ist, auf Grundlage der Positionsinformation eine Steueranweisung für die Verschiebung der relevanten Fördereinrichtung zu erzeugen.

6. Anlage nach einem der Ansprüche 1 bis 5, wobei die Steueranweisungen für die Verschiebung Anweisungen für die Geschwindigkeit der Verschiebung und/oder Anweisungen zur Beschleunigung umfassen.

7. Anlage nach einem der Ansprüche 1 bis 6, wobei jede elementare Fördereinrichtung (30) mit einer elementaren Motorisierung ausgestattet ist und die Steueranweisungen für die Verschiebung Anweisungen zur Aktivierung der elementaren Motorisierungen der jeweiligen elementaren Fördereinrichtungen umfassen.

8. Anlage nach Anspruch 7, wobei die elementare Motorisierung einen ersten Teil eines Elektromotors, insbesondere vom Typ eines linearen Servomotors, umfasst, und die Bahn (32) mit einer Vielzahl von Magnetspulen (33) ausgestattet ist, die selektiv durch die Steuereinheit (ECU) bestromt werden und den zweiten Teil des Elektromotors bilden.

9. Anlage nach einem der Ansprüche 1 bis 8, wobei die Bearbeitungsstationen (14A, 14B, 14C, 16, 18, 20, 22, 26) auf derselben Seite entlang der Bahn (32) angeordnet sind.

10. Anlage nach Anspruch 9, wobei die Bearbeitungsstationen von Trägern (S) getragen werden, die ebenfalls auf derselben Seite der Bahn (32) angeordnet sind.

11. Anlage nach einem der Ansprüche 1 bis 10, die eine Eingangsstation (E) umfasst, welche Mittel (26) zum Zuführen eines Bandes aus thermoplastischem Material (8) gemäß einer Zuführrichtung quer zur Förderrichtung sowie Mittel zum Abschneiden (60) von elementaren Bögen (10), deren Länge (L) durch die Breite des Bandes aus thermoplastischem Material definiert ist, aus dem Band aus thermoplastischem Material aufweist.

12. Anlage nach einem der Ansprüche 1 bis 11, **dadurch gekennzeichnet, dass** die elementaren Fördereinrichtungen (30) Greifer (34) umfassen, die dazu ausgestaltet sind, einen einzelnen Griffrand (10A) der elementaren Bögen (10) zu ergreifen, wobei die Greifer der elementaren Fördereinrichtungen, welche die elementaren Bögen befördern, sich alle auf derselben Seite der Bahn befinden.

13. Anlage nach einem der Ansprüche 1 bis 12, die einen Träger (50) für die elementaren Bögen umfasst, der eine Arbeitsebene in den verschiedenen Bearbeitungsstationen definiert.

14. Anlage nach einem der Ansprüche 1 bis 13, wobei die Bearbeitungsstationen ferner eine Station (18) zum Befüllen der thermogeformten Behälter und eine Station (20) zum Verschließen der Behälter durch Anbringung von Versiegelungsbögen auf die elementaren Bögen, welche die thermogeformten Behälter beinhalten, umfassen, wobei die Anlage ferner ein vorgeschaltetes Schneidwerkzeug (61), das dazu ausgestaltet ist, Abfallzonen aus den elementaren Bögen (10) vor der Anbringung der Versiegelungsbögen (11) auszuschneiden, und ein nachgeschaltetes Schneidwerkzeug (64) umfasst, das dazu ausgestaltet ist, entsprechende Abfallzonen aus den Versiegelungsbögen auszuschneiden.

15. Anlage nach Anspruch 14, die Mittel zum Zuführen eines Bandes aus Versiegelungsmaterial (19) gemäß einer Richtung quer zur Förderrichtung (F) und Mittel zum Abschneiden von Versiegelungsbögen von dem Band aus Versiegelungsmaterial (19), so dass die Länge der Versiegelungsbögen durch die Breite des Bandes aus Versiegelungsmaterial definiert ist, umfasst.

16. Anlage nach Anspruch 14 oder 15, in Kombination mit Anspruch 11, wobei das vorgeschaltete Schneidwerkzeug (62) einen Teil der Eingangsstation (E) bildet und optional einen Teil derselben Station zum Abschneiden bildet wie die Mittel (61) zum Abschneiden der elementaren Bögen (10).

## Claims

1. An installation for producing containers by thermoforming, comprising conveying means able to be controlled by a control unit (ECU) for driving a thermoplastic substrate (10) in a series of processing stations (14A, 14B, 14C, 16, 18 , 20, 22, 24) along a conveying direction (F), the processing stations comprising at least one station (14A, 14B, 14C) for heating the substrate and one station (18) for thermoforming containers in the heated substrate, each processing station defining a processing length (L) measured in the conveying direction (F), the conveying means comprising a plurality of basic conveyors (30) each configured to drive, in the processing stations, a basic sheet (10) of substrate whose length, measured in the conveying direction, is substantially equal to the processing length, the basic conveyors (30) cooperating with a travel track (32) and their respective movements being controlled according to respective movement control instructions generated by the control unit (ECU), such that the basic conveyors are parked longer in the heating station than in the thermoforming station and are displaced more rapidly between the heating station and the thermoforming station than downstream of the thermoforming station.

2. The installation according to claim 1, wherein the track (32) forms a loop comprising a forward path (32A) on which the basic conveyors (30) circulate to successively place the basic sheets (10) they convey in the processing stations, and a backward path (32B), on which the basic conveyors (30) circulate to return to the upstream of the installation.

3. The installation according to claim 1 or 2, comprising means for locating the position of the basic conveyors (30) with respect to the processing stations (14A, 14B, 14C, 16, 18, 20, 22, 24).

4. The installation according to claim 3, wherein each processing station (14A, 14B, 14C, 16, 18, 20, 22, 24) has a detector (40) configured to generate information on the position, relative to the considered processing station, of a basic sheet (10) conveyed by a given basic conveyor (30), the control unit (ECU) being configured to generate, based on said position information, an instruction for controlling the movement of said given basic conveyor.

5. The installation according to claim 3 or 4, wherein each basic conveyor (30) has a detector (42) configured to generate information on the position of the considered basic conveyor (30) relative to a given processing station (16), the control unit (ECU) being configured to generate, based on said position information, an instruction for controlling the movement of said considered conveyor.

6. The installation according to any one of claims 1 to 5, wherein the movement control instructions comprise movement speed instructions and/or acceleration instructions.

7. The installation according to any one of claims 1 to 6, wherein each basic conveyor (30) is equipped with a basic motorization, the movement control instructions comprising instructions for activating the basic motorizations of the respective basic conveyors.

8. The installation according to claim 7, wherein the basic motorization comprises a first part of an electric motor, particularly of the linear servomotor type, and the track (32) is equipped with a multiplicity of magnetic windings (33), selectively powered by the control unit (ECU) and forming the second part of the electric motor.

9. The installation according to any one of claims 1 to 8, wherein the processing stations (14A, 14B, 14C, 16, 18, 20, 22, 26) are disposed on a same side along the track (32).

10. The installation according to claim 9, wherein the processing stations are supported by supports (S), also disposed on said same side of the track (32).

11. The installation according to any one of claims 1 to 10, comprising an input station (E) having means (26) for feeding a strip of thermoplastic material (8) along a supply direction transverse to the conveying direction and means (60) for cutting, in said strip of thermoplastic material, basic sheets (10) whose length (L) is defined by the width of the strip of thermoplastic material.

12. The installation according to any one of claims 1 to 11, **characterized in that** the basic conveyors (30) comprise grippers (34) configured to grip a single gripping edge (10A) of the basic sheets (10), the grippers of the basic conveyors conveying the basic sheets being all located on the same side of the track.

13. The installation according to any one of claims 1 to 12, comprising a support (50) for the basic sheets defining a work plane in the different processing stations.

14. The installation according to any one of claims 1 to 13, wherein the processing stations further comprise a station (18) for filling the thermoformed containers and a station (20) for closing the containers by application of lidding sheets on the basic sheets including the thermoformed containers, the installation further comprising an upstream cutting tool (61) configured to cut out waste areas in the basic sheets (10) prior to the application of the lidding sheets (11), and a downstream cutting tool (64) configured to cut out corresponding waste areas in the lidding sheets.

15. The installation according to claim 14, comprising means for feeding a strip of lidding material (19) along a direction transverse to the conveying direction (F) and means for cutting the lidding sheets in said strip of lidding material (19), so that the length of the lidding sheets is defined by the width of the strip of lidding material.

16. The installation according to claim 14 or 15, taken in combination with claim 11, wherein the upstream cutting tool (62) is part of the input station (E) and, optionally, is part of the same cutting station as the means (61) for cutting the basic sheets (10).
